# EUROPÄISCHE PATENTSCHRIFT

(11) **EP 4 410 090 B1**
(45) Veröffentlichungstag und Bekanntmachung des Hinweises auf die Patenterteilung: **29.10.2025**
(21) Anmeldenummer: 23212734.0
(22) Anmeldetag: 28.11.2023
(51) Int. Cl.: A01D 43/073, A01D 43/08

(54) **BESCHLEUNIGERSPALTVERSTELLUNG DURCH KNIEHEBELPRINZIP**
ACCELERATOR GAP ADJUSTMENT OF TOGGLE THROUGH LEVER PRINCIPLE
RÉGLAGE DE JEU D'ACCÉLÉRATEUR PAR DISPOSITIF À GENOUILLÈRE

(30) Priorität: 31.01.2023 DE 102023000284; 31.01.2023 DE 102023102282; 31.01.2023 DE 102023102283; 31.01.2023 DE 102023102284
(43) Veröffentlichungstag der Anmeldung: 07.08.2024
(73) Patentinhaber: CLAAS Saulgau GmbH, 88348 Bad Saulgau (DE)
(72) Erfinder: Löffler, Niklas, 88367 Hohentengen (DE); Deufel, Tobias, 88605 Meßkirch-Menningen (DE); Stöferle, Christian, 88471 Laupheim (DE)
(74) Vertreter: Budach, Steffen

(56) Entgegenhaltungen:
- EP-A1- 1 380 204
- EP-A1- 1 961 288
- DE-A1- 102011 052 944
- DE-A1- 102014 106 696
- US-B1- 6 604 352

## Beschreibung

Die vorliegende Erfindung betrifft einen selbstfahrenden Feldhäcksler gemäß dem Oberbergriff des Anspruches 1.

Ein selbstfahrender Feldhäcksler der eingangs genannten Art ist aus der EP 1 961 288 A1 bekannt. Der selbstfahrende Feldhäcksler umfasst ein um eine Drehachse rotierendes Nachbeschleunigungsorgan zur veränderlichen Beschleunigung von Erntegut, wobei die Drehachse mittels Gleitvorrichtungen endseitig in Führungen gelagert ist, die an Seitenwänden, die ein das Nachbeschleunigungsorgan zumindest abschnittsweise ummantelndes Gehäuse begrenzen, verschiebbar angeordnet sind. Zur veränderlichen Beschleunigung des Erntegutes ist die Weite eines Erntegutdurchgangsspaltes des Nachbeschleunigungsorgans mittels einer Spaltänderungsvorrichtung anpassbar, wobei die Spaltänderungsvorrichtung zumindest einen Hydraulikzylinder, der in einer ersten Lagerstelle an einer relativ zum Nachbeschleunigungsorgan ortsfest gelagerten Exzenterwelle angelenkt ist, sowie eine in einer zweiten Lagerstelle an der Exzenterwelle angelenkte Hebelanordnung umfasst. Die Hebelanordnung weist zwei parallel angeordnete Hebelarme auf, die mit einem Ende an den an axialen Stirnflächen der Exzenterwelle exzentrisch angeordneten zweiten Lagerstellen angreifen. Mit ihrem anderen Ende sind die Hebelarme an den Gleitvorrichtungen angelenkt, um die Gleitvorrichtungen bei einer Drehung der Exzenterwelle entlang der Führungen zu verschieben. Der Verstellweg ist durch Langlöcher begrenzt, welche jeweils paarweise oberhalb und unterhalb der Drehachse in den Seitenwänden des das Nachbeschleunigungsorgan zumindest abschnittsweise ummantelnden Gehäuses angeordnet sind. Neben dem eingeschränkten Verstellweg ist die Verstellgeschwindigkeit zur Anpassung an unterschiedliche Ernte- bzw. Betriebssituationen ein die Effizienz des Nachbeschleunigungsorgans limitierender Faktor.

Ausgehend von dem vorstehend genannten Stand der Technik ist es demnach die Aufgabe der vorliegenden Erfindung, einen selbstfahrenden Feldhäcksler der eingangs genannten Art weiterzubilden, der sich durch eine verbesserte Effizienz beim Betreiben des Nachbeschleunigungsorgans auszeichnet.

Diese Aufgabe wird durch einen selbstfahrenden Feldhäcksler mit den Merkmalen des Anspruches 1 gelöst. Vorteilhafte Weiterbildungen sind Gegenstand der hiervon abhängigen Ansprüche 2 bis 9.

Gemäß Anspruch 1 wird ein selbstfahrender Feldhäcksler, mit einem um eine Drehachse rotierenden Nachbeschleunigungsorgan zur Beschleunigung von Erntegut vorgeschlagen, wobei die Drehachse endseitig in Führungen gelagert ist, die an Seitenwänden, die ein das Nachbeschleunigungsorgan zumindest abschnittsweise ummantelndes Gehäuse begrenzen, verschiebbar angeordnet sind, wobei zur veränderlichen Beschleunigung des Erntegutes die Weite eines Erntegutdurchgangsspaltes des Nachbeschleunigungsorgans mittels einer Spaltänderungsvorrichtung anpassbar ist, wobei die Spaltänderungsvorrichtung zumindest einen Linearaktor, der in einem ersten Anlenkpunkt an einem relativ zum Nachbeschleunigungsorgan um eine ortsfeste Achse drehbar oder schwenkbar angeordneten Koppelelementes angelenkt ist, sowie eine Hebelanordnung, die in einem zweiten, zum ersten Anlenkpunkt beabstandeten Anlenkpunkt an dem Koppelelement angelenkt ist, umfasst. Erfindungsgemäß ist vorgesehen, dass zwischen der ortsfesten Achse und dem ersten Anlenkpunkt ein erster Hebelarm und zwischen der ortsfesten Achse und dem zweiten Anlenkpunkt ein zweiter Hebelarm am Koppelelement ausgebildet ist, wobei das Hebelverhältnis zwischen dem zweiten Hebelarm und dem ersten Hebelarm zwischen 1,01 und 1,2, insbesondere zwischen 1,07 und 1,17 liegt.

Der Erfindung liegt die Überlegung zugrunde, einen gegenüber dem Stand der Technik größeren Verstellweg zur Einstellung der Weite des Erntegutdurchgangsspaltes zu ermöglichen und zugleich mit zunehmender Weite des Erntegutdurchgangsspaltes eine Erhöhung der Verstellgeschwindigkeit zu erreichen. Der erfindungsgemäße Bereich des Hebelverhältnisses ermöglicht innerhalb eines Bereichs der Weite des Erntegutdurchgangsspaltes zwischen 2 mm und etwa 35 mm eine sehr präzise Einstellung der Weite. Dabei werden hohe Kräfte übertragen, die von dem zumindest einen Linearaktor über den ersten Hebelarm auf das Koppelelement aufgebracht werden. Bei einer Weite des Erntegutdurchgangsspaltes oberhalb von zirka 35 mm nimmt die Verstellgeschwindigkeit zu, bei geringerer Kraftübertragung.

Insbesondere kann das Koppelelement als eine Welle ausgeführt sein, die um ihre Längsachse drehbar oder schwenkbar gelagert ist. Bei einer Ausführung des Koppelelementes als Welle sind der erste Anlenkpunkt und der zweite Anlenkpunkt bevorzugt auf dem Außenumfang der Welle und in Umfangsrichtung beabstandet angeordnet.

Insbesondere können der erste Anlenkpunkt und der zweite Anlenkpunkt als Konsolen ausgeführt sein, die auf dem Außenumfang des Koppelelementes angeordnet sind.

Bevorzugt kann die Hebelanordnung, welche die Drehachse mit dem Koppelelement kinematisch verbindet, als Kniehebelanordnung ausgeführt sein.

Besonders bevorzugt kann die Hebelanordnung die von dem Koppelelement übertragene translatorische Bewegung bzw. Kraft in der Ebene der Drehachse einleiten. Somit kann einem Verkippen oder Verkanten der Führung der Drehachse gegenüber den Führungsabschnitten begegnet werden, wodurch zumindest ein erhöhter Kraftaufwand für das Verstellen vermieden wird. Die Ebene der Drehachse verläuft entlang der Längsachse der Führungen. Es ist eine symmetrische Anordnung der Hebelanordnung an der Führung der Drehachse bezogen auf die Führungsabschnitte vorgesehen.

Gemäß einer Weiterbildung kann die Hebelanordnung einen ersten Hebel, der in dem zweiten Anlenkpunkt an dem Koppelelement angelenkt ist, und einen zweiten Hebel, der mit einem Ende gelenkig mit dem ersten Hebel verbunden ist und mit seinem anderen Ende drehfest an der Führung der Drehachse befestigt ist, umfassen. Insbesondere kann sich der zweite Hebel senkrecht zur Drehachse erstrecken und im Wesentlichen parallel zu den Führungsabschnitten erstrecken.

Bevorzugt kann die Spaltänderungsvorrichtung eine Verstellcharakteristik mit einem im Wesentlichen progressiv ansteigenden Verlauf der Einstellung der Weite des Erntegutdurchgangsspaltes aufweisen. Der Vorteil einer solchen Spaltänderungsvorrichtung besteht darin, dass bei einer Einstellung kleiner Abstandswerte für die Weite des Erntegutspaltes eine sehr präzise Einstellung durch die Spaltänderungsvorrichtung ermöglicht wird, während mit der Einstellung zunehmender Abstandswerte für die Weite die Veränderung schneller durch die Ansteuerung der Spaltänderungsvorrichtung erreicht wird. Ersteres ist für trockenes Erntegut und/oder geringe Erntegutdurchsätze relevant, die beispielsweise auf eine Unregelmäßigkeit in der Form eines aufzunehmenden Schwads, eine Lücke im Schwad oder das Anschneiden eines Feldbestands bzw. das Erreichen eines Vorgewendes zurückgehen können. Letzteres ist für im Wesentlichen gleichmäßige größere Erntegutdurchsätze relevant, um die Leistungsaufnahme des Nachbeschleunigungsorgans zu optimieren.

Insbesondere kann die Spaltänderungsvorrichtung dazu eingerichtet sein, die Weite des Erntegutdurchgangsspaltes auf einen Minimalwert von 2 mm bis zu einem Maximalwert von 80 mm einzustellen. Vorzugsweise kann die Verstellung mittels der Spaltänderungsvorrichtung stufenlos erfolgen.

Gemäß einer bevorzugten Weiterbildung kann der erste Hebelarm bei einer Weite des Erntegutdurchgangsspaltes unterhalb von zirka 35 mm im Wesentlichen parallel zu den Führungsabschnitten verlaufen. Dadurch kann einem Verkippen bei vom Linearaktor aufgebrachter maximaler Verstellkraft entgegengewirkt werden.

Gemäß einer Weiterbildung können die beidseitig der Drehachse angeordneten Führungsabschnitte als achsparallele Gleitflächen ausgeführt sein, die im Wesentlichen parallel zur Ebene der Drehachse verlaufen.

Bevorzugt kann der zumindest eine Linearaktor als Hydraulikzylinder, Linearmotor oder Spindel ausgeführt sein. Bei einer Ausführung des zumindest einen Linearaktors als Hydraulikzylinder ist das erfindungsgemäße Hebelverhältnis vorteilhaft, um einen sicheren Betrieb des Hydraulikzylinders bzw. der Hydraulikzylinder zu gewährleisten. Für eine sichere Verstellung des Kolbens im Hydraulikzylinder ist eine Mindestölmenge und damit ein vorgegebener Verfahrweg erforderlich. Das erfindungsgemäße Hebelverhältnis zwischen dem ersten Hebelarm, an dem der Linearaktor respektive der Hydraulikzylinder angreift, und dem zweiten Hebelarm ermöglicht es, bei einer Weite des Erntegutdurchgangsspaltes unterhalb von zirka 30 mm, eine präzise Veränderung der Weite vorzunehmen, da bei dem hierfür erforderlichen Verfahrweg des Kolbens im Hydraulikzylinder eine nur geringfügige Verstellung der Drehachse bzw. des Nachbeschleunigungsorgans erfolgt.

Vorzugsweise sind zwei Linearaktoren vorgesehen, die an zueinander axial beabstandeten ersten Anlenkpunkten an dem Koppelelement angelenkt sind. Die beiden ersten Anlenkpunkte können zwischen zwei das Koppelelement drehbar oder schwenkbar lagernden Lagerelementen angeordnet sein. An den äußeren Enden des Koppelelementes sind die beiden zweiten Anlenkpunkte angeordnet, an welchen jeweils eine Hebelanordnung angelenkt ist.

Die vorliegende Erfindung wird nachstehend anhand eines in den Zeichnungen dargestellten Ausführungsbeispiels näher erläutert.

Es zeigen:
- Fig. 1: eine schematische Darstellung eines selbstfahrenden Feldhäckslers in Seitenansicht;
- Fig. 2: schematisch und exemplarisch eine Seitenansicht eines Nachbeschleunigungsorgans des Feldhäckslers in einer Position mit minimaler Weite eines Erntegutdurchgangsspaltes; und
- Fig. 3: schematisch und exemplarisch eine Seitenansicht des Nachbeschleunigungsorgans gemäß Fig. 2 in einer Position mit maximaler Weite des Erntegutdurchgangsspaltes.

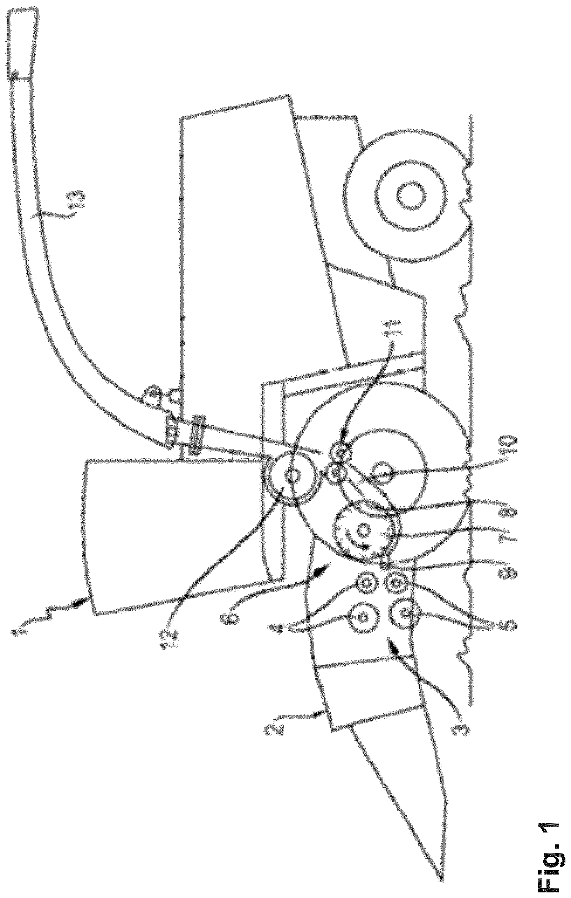

In Fig. 1 ist eine als Feldhäcksler ausgeführte selbstfahrende landwirtschaftliche Erntemaschine 1 abgebildet, an welcher im frontseitigen Bereich zur Aufnahme von auf dem Boden abgelegten Erntegut ein Vorsatzgerät 2 angeordnet ist. Das Vorsatzgerät 2 variiert in Abhängigkeit von der zu erntenden bzw. aufzunehmenden Erntegutart. Das Vorsatzgerät 2 nimmt das Erntegut vom Feld auf und fördert es einem Einzugsorgan 3 zu, die im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut gelangt durch die Rotationsbewegung der Häckseltrommel 7 in einen nachgeordneten Förderkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten, rotierend angetriebenen Nachbeschleunigungsorgan 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse drehbar, beispielsweise mittels eines Drehkranzes. Zusätzlich und unabhängig davon ist die Überladeeinrichtung 13 um eine horizontal verlaufende Achse schwenkbar. Am freien Ende der Überladeeinrichtung 13 kann eine sogenannte Auswurfklappe angeordnet sein, welche gegenüber der Überladeeinrichtung 13 um eine horizontal verlaufende Achse schwenkbar ist.

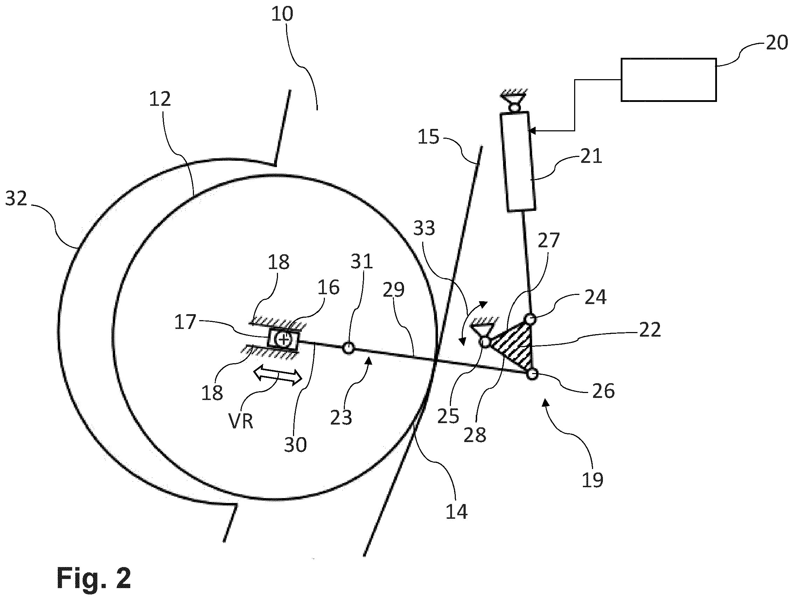

In Fig. 2 ist schematisch und exemplarisch eine Seitenansicht des Nachbeschleunigungsorgans 12 der Erntemaschine 1 in einer eingestellten Position mit minimaler Weite eines Erntegutdurchgangsspaltes 14 dargestellt. In Fig. 2 beträgt die minimale Weite des einstellbaren Erntegutdurchgangsspaltes 14 etwa 2 mm.

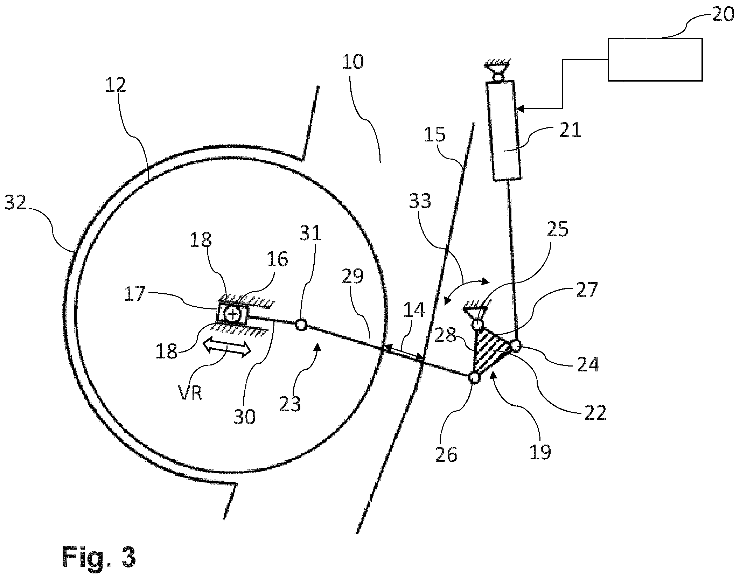

Die Darstellung in Fig. 3 zeigt schematisch und exemplarisch eine Seitenansicht des Nachbeschleunigungsorgans 12 gemäß Fig. 1 in einer eingestellten Position mit maximaler Weite des Erntegutdurchgangsspaltes 14. In Fig. 3 beträgt die maximale Weite des einstellbaren Erntegutdurchgangsspaltes 14 etwa 80 mm.

Die Weite des einstellbaren Erntegutdurchgangsspaltes 14 des rotierend angetriebenen Nachbeschleunigungsorgans 12 bezeichnet den Abstand zwischen dem Nachbeschleunigungsorgan 12 respektive dessen Hüllkreis und einer diesem gegenüberliegenden Wandung 15 des Förderkanals 10 der Erntemaschine 1.

Das Nachbeschleunigungsorgan 12 weist eine Drehachse 16 auf, die endseitig in Führungen 17 gelagert ist. Die Führungen 17 sind, wie durch den Pfeil VR veranschaulicht, in Führungsabschnitten 18 verschiebbar angeordnet. Die Führungsabschnitte 18 sind an Seitenwänden, die ein das Nachbeschleunigungsorgan 12 zumindest abschnittsweise ummantelndes Gehäuse 32 seitlich begrenzen, angeordnet. Die Seitenwände können Teil des Gehäuses 32 sein. Die beidseitig der Drehachse 16 angeordneten Führungsabschnitte 18 sind als achsparallele Gleitflächen ausgeführt, die im Wesentlichen parallel zur Ebene der Drehachse 16 verlaufen.

Zur veränderlichen Beschleunigung des entlang des Förderkanals 10 geförderten Erntegutes ist die Weite des Erntegutdurchgangsspaltes 14 des Nachbeschleunigungsorgans 12 mittels einer Spaltänderungsvorrichtung 19 anpassbar. Der Spaltänderungsvorrichtung 19 ist eine Steuerungsvorrichtung 20 zugeordnet, die zur Ansteuerung der Spaltänderungsvorrichtung 19 durch von der Steuerungsvorrichtung 20 generierte Steuersignale eingerichtet ist.

Die Spaltänderungsvorrichtung 19 umfasst gemäß der dargestellten Ausführungsform zur, insbesondere translatorischen, Bewegung (Pfeil VR) des Nachbeschleunigungsorgans 12 eine Aktorik, mittels der die Weite des Erntegutdurchgangsspaltes 14 veränderbar ist. Durch die Änderung der Weite des Erntegutdurchgangsspaltes 14 wird auf unterschiedliche Betriebssituationen reagiert, in welchen eine unterschiedliche Beschleunigung des Erntegutes durch das Nachbeschleunigungsorgan 12 erforderlich ist.

Die Aktorik der Spaltänderungsvorrichtung 19 umfasst mechanisch, hydraulisch und/oder elektromechanisch betätigbare Antriebselemente 21, 22, 23. Im dargestellten Ausführungsbeispiel umfasst die Aktorik der Spaltänderungsvorrichtung 19 zumindest einen Hydraulikzylinder 21, ein Koppelelement 22 sowie zumindest eine Hebelanordnung 23. Alternativ kann anstelle des zumindest einen Hydraulikzylinders 21 ein Linearmotor oder eine Spindel vorgesehen sein. Das Koppelelement 22 kann bevorzugt als Welle ausgeführt sein.

Der zumindest eine Hydraulikzylinder 21 greift an einem ersten Anlenkpunkt 24 an dem Koppelelement 22 an. Hierzu kann der erste Anlenkpunkt 24 als eine an dem Koppelelement 22 angeordnete Konsole ausgeführt sein. Durch Einfahren und Ausfahren des zumindest einen Hydraulikzylinders 21 lässt sich das Koppelelement 22 um eine ortsfeste Achse 25 drehen oder schwenken.

Die Hebelanordnung 23 greift an einem zum ersten Anlenkpunkt 24 beabstandeten zweiten Anlenkpunkt 26 an dem Koppelelement 22 an, sodass die lineare Bewegung des zumindest einen Hydraulikzylinders 21 durch die Dreh- oder Schwenkbewegung des Koppelelementes 22 auf die Hebelanordnung 23 übertragen wird.

Bevorzugt sind zwei zueinander beabstandet angeordnete Hydraulikzylinder 21 sowie zwei Hebelanordnungen 23, vorgesehen, welche an dem Koppelelement 2 in den ersten Anlenkpunkten 24 bzw. den zweiten Anlenkpunkten 26 angreifen. Das Vorsehen zweier Hydraulikzylinder 21 sowie zweier Hebelanordnungen 23 ermöglicht eine gleichmäßigere Verstellung des Koppelelements 22 und der mit den Hebelanordnungen 23 verbundenen Drehachse 16.

Das Einfahren der Kolbenstange des zumindest einen Hydraulikzylinders 21 bewirkt ein Drehen bzw. Schwenken des Koppelelements 22 gegen den Uhrzeigersinn, wodurch die Drehachse 16 des Nachbeschleunigungsorgan 12 in Richtung der Wandung 15 des Förderkanals 10 bewegt wird.

Das Ausfahren der Kolbenstange des Hydraulikzylinders 21 bewirkt ein Drehen bzw. Schwenken (Pfeil 33) des Koppelelements 22 im Uhrzeigersinn, wodurch die Drehachse 16 des Nachbeschleunigungsorgans 12 von der Wandung 15 zunehmend beabstandet wird.

Wesentlich ist, dass die Spaltänderungsvorrichtung 19 eine Verstellcharakteristik mit einem im Wesentlichen progressiv ansteigenden Verlauf der Einstellung der Weite des Erntegutdurchgangsspaltes 14 aufweist. Der Vorteil einer derart ausgeführten Spaltänderungsvorrichtung 19 besteht darin, dass bei einer Einstellung kleiner Abstandswerte, insbesondere kleiner oder gleich 30 mm, für die Weite des Erntegutspaltes 14 eine sehr präzise Einstellung durch die Spaltänderungsvorrichtung 19 ermöglicht wird, während mit der Einstellung zunehmender Abstandswerte, insbesondere größer 35 mm, für die Weite die Veränderung schneller durch die Ansteuerung der Spaltänderungsvorrichtung 19 erreicht wird. Dabei ist eine präzise Einstellung kleiner Abstandswerte für die Weite des Erntegutdurchgangsspaltes 14 insbesondere für trockenes Erntegut und/oder für geringe Erntegutdurchsätze relevant. Die präzise Einstellung kleiner Abstandswerte für die Weite des Erntegutdurchgangsspaltes 14 ermöglicht bei trockenem Erntegut und/oder geringem Erntegutdurchsatz eine optimale Beschleunigung und einen energieeffizienteren Betrieb des Nachbeschleunigungsorgans 12. Das vor allem schnelle Einstellen großer Abstandswerte für die Weite des Erntegutdurchgangsspaltes 14 ist relevant, um auf eine sprunghafte Zunahme der Erntegutdurchsätze, wie sie nach kurz dem Einfahren in den Bestand auftreten, reagieren zu können sowie um den Energieverbrauch zu optimieren.

Hierzu ist erfindungsgemäß vorgesehen, zwischen der ortsfesten Achse 25 und dem ersten Anlenkpunkt 24 einen ersten Hebelarm 27 und zwischen der ortsfesten Achse 25 und dem zweiten Anlenkpunkt 26 einen zweiten Hebelarm 28 am Koppelelement 22 auszubilden, wobei das Hebelverhältnis zwischen dem zweiten Hebelarm 28 und dem ersten Hebelarm 27 zwischen 1,01 und 1,2, insbesondere zwischen 1,07 und 1,17 liegt. Der zweite Hebelarm 28 ist dabei länger als der erste Hebelarm 27 ausgeführt.

Die Hebelanordnung 23, welche die Drehachse 16 mit dem Koppelelement 22 kinematisch verbindet, ist als Kniehebelanordnung ausgeführt. Die Hebelanordnung 23 umfasst einen ersten Hebel 29, der in dem zweiten Anlenkpunkt 26 an dem Koppelelement 22 angelenkt ist, und einen zweiten Hebel 30, der mit einem Ende durch eine Gelenk 31 gelenkig mit dem ersten Hebel 29 verbunden ist und mit seinem anderen Ende drehfest bzw. starr an der Führung 17 der Drehachse 16 befestigt ist.

Die Hebelanordnung 23 leitet die von dem Koppelelement 22 übertragene translatorische Bewegung in der Ebene der Drehachse 16 ein. Somit kann einem Verkippen oder Verkanten der Führung 17 der Drehachse 16 gegenüber den Führungsabschnitten 18 begegnet werden, wodurch zumindest ein erhöhter Kraftaufwand für das Verstellen vermieden wird.

Der zweite Hebel 30 ist hierzu parallel zu den Führungsabschnitten 18 orientiert an der Führung 17 angeordnet. Das den zweiten Hebel 30 und den ersten Hebel 29 verbindende Gelenk 31 dient dazu, eine Ausgleichsbewegung der Hebelanordnung 23 zu ermöglichen, wie aus Fig. 3 ersichtlich, wenn die Verstellung der Weite des Erntegutspaltes 14 durch das Drehen oder Schwenken des Koppelelementes 22 dies erfordert.

Der erfindungsgemäße Bereich des Hebelverhältnisses ermöglicht innerhalb eines Bereichs der Weite des Erntegutdurchgangsspaltes 14 zwischen 2 mm und etwa 35 mm eine sehr präzise Einstellung der Weite. Dabei werden während der Verstellung hohe Kräfte übertragen, die von dem zumindest einen Hydraulikzylinder 21 über den ersten Hebelarm 27 auf das Koppelelement 22 aufgebracht werden. Bei einer Weite des Erntegutdurchgangsspaltes oberhalb von zirka 35 mm nimmt die Verstellgeschwindigkeit zu, bei geringerer Kraftübertragung.

Der erste Hebel 29 der Hebelanordnung 23 erstreckt bei einer Weite des Erntegutdurchgangsspaltes 14 unterhalb von zirka 35 mm im Wesentlichen parallel zu den Führungsabschnitten 18. Mit abnehmender Weite des eingestellten Erntegutdurchgangsspaltes 14 nimmt die Auslenkung des ersten Hebels 29 gegenüber dem zweiten Hebel 30 der Hebelanordnung 23 ab.

Wie aus der Darstellung in Fig. 3 exemplarisch ersichtlich, wird der erste Hebel 29 der Hebelanordnung 23 bei einer Weite des Erntegutdurchgangsspaltes 14 oberhalb von zirka 35 mm um das Gelenk 31 verschwenkt. Mit zunehmender Weite des eingestellten Erntegutdurchgangsspaltes 14 nimmt die Auslenkung des ersten Hebels 29 gegenüber dem zweiten Hebel 30 der Hebelanordnung 23 zu. Da mit zunehmender Weite des Erntegutdurchgangsspaltes 14 die zu übertragenden Kräfte geringer werden, kommt es nicht zu einem Verkanten. Zugleich nimmt die Verstellgeschwindigkeit überproportional zu, wodurch schneller auf Änderungen einer bestehenden Betriebs- und/oder Erntesituation reagiert werden kann.

### Bezugszeichenliste

- 1: Feldhäcksler
- 2: Vorsatzgerät
- 3: Einzugsorgan
- 4: Obere Einzugswalzen
- 5: Untere Einzugswalzen
- 6: Häckselvorrichtung
- 7: Häckseltrommel
- 8: Häckselmesser
- 9: Gegenschneide
- 10: Förderkanal
- 11: Nachbearbeitungsvorrichtung
- 12: Nachbeschleunigungsorgan
- 13: Überladeeinrichtung
- 14: Erntegutdurchgangsspalt
- 15: Wandung
- 16: Drehachse
- 17: Führung
- 18: Führungsabschnitt
- 19: Spaltänderungsvorrichtung
- 20: Steuerungsvorrichtung
- 21: Hydraulikzylinder
- 22: Koppelelement
- 23: Hebelanordnung
- 24: Erster Anlenkpunkt
- 25: Ortsfeste Achse
- 26: Zweiter Anlenkpunkt
- 27: Erster Hebelarm
- 28: Zweiter Hebelarm
- 29: Erster Hebel
- 30: Zweiter Hebel
- 31: Gelenk
- 32: Gehäuse
- 33: Pfeil
- VR: Bewegung (Pfeil)

## Patentansprüche

1. Selbstfahrender Feldhäcksler (1), mit einem um eine Drehachse (16) rotierenden Nachbeschleunigungsorgan (12) zur veränderlichen Beschleunigung von Erntegut, wobei die Drehachse (16) endseitig in Führungen (17) gelagert ist, die an Seitenwänden, die ein das Nachbeschleunigungsorgan (12) zumindest abschnittsweise ummantelndes Gehäuse (32) begrenzen, in Führungsabschnitten (18) verschiebbar angeordnet sind, wobei zur veränderlichen Beschleunigung des Erntegutes die Weite eines Erntegutdurchgangsspaltes (14) des Nachbeschleunigungsorgans (12) mittels einer Spaltänderungsvorrichtung (19) anpassbar ist, wobei die Spaltänderungsvorrichtung (19) zumindest einen Linearaktor (21), der in einem ersten Anlenkpunkt (24) an einem relativ zum Nachbeschleunigungsorgan (12) ortsfest um eine Achse (25) drehbar oder schwenkbar angeordnetes Koppelelement (22) angelenkt ist, sowie eine Hebelanordnung (23), die in einem zweiten, zum ersten Anlenkpunkt (24) beabstandeten Anlenkpunkt (26) an dem Koppelelement (22) angelenkt ist, umfasst, **dadurch gekennzeichnet, dass** zwischen der ortsfesten Achse (25) und dem ersten Anlenkpunkt (24) ein erster Hebelarm (27) und zwischen der ortsfesten Achse (25) und dem zweiten Anlenkpunkt (26) ein zweiter Hebelarm (28) am Koppelelement (22) ausgebildet ist, wobei das Hebelverhältnis zwischen dem zweiten Hebelarm (28) und dem ersten Hebelarm (27) zwischen 1,01 und 1,2, insbesondere zwischen 1,07 und 1,17 liegt.

2. Feldhäcksler (1) nach Anspruch 1 oder 2, **dadurch gekennzeichnet, dass** die Hebelanordnung (23), welche die Drehachse (16) mit dem Koppelelement (22) kinematisch verbindet, als Kniehebelanordnung ausgeführt ist.

3. Feldhäcksler (1) nach einem der Ansprüche 1 bis 3, **dadurch gekennzeichnet, dass** die Hebelanordnung (23) die von dem Koppelelement (22) übertragene translatorische Bewegung in der Ebene der Drehachse (16) in die Führungen (17) einleitet.

4. Feldhäcksler (1) nach einem der vorangehenden Ansprüche, **dadurch gekennzeichnet, dass** die Hebelanordnung (23) einen ersten Hebel (29), der in dem zweiten Anlenkpunkt (26) an dem Koppelelement (22) angelenkt ist, und einen zweiten Hebel (30), der mit einem Ende gelenkig mit dem ersten Hebel (29) verbunden ist und mit seinem anderen Ende starr an der Führung (17) der Drehachse (16) befestigt ist, umfasst.

5. Feldhäcksler (1) nach einem der vorangehenden Ansprüche, **dadurch gekennzeichnet, dass** die Spaltänderungsvorrichtung (19) eine Verstellcharakteristik mit einem im Wesentlichen progressiv ansteigenden Verlauf der Einstellung der Weite des Erntegutdurchgangsspaltes (14) aufweist.

6. Feldhäcksler (1) nach einem der vorangehenden Ansprüche, **dadurch gekennzeichnet, dass** die Spaltänderungsvorrichtung (19) dazu eingerichtet ist, die Weite des Erntegutdurchgangsspaltes (14) auf einen Minimalwert von 2 mm bis zu einem Maximalwert von 80 mm einzustellen.

7. Feldhäcksler (1) nach Anspruch 7, **dadurch gekennzeichnet, dass** der erste Hebel (29) bei einer Weite des Erntegutdurchgangsspaltes (14) unterhalb von zirka 35 mm im Wesentlichen parallel zu den Führungsabschnitten (18) verläuft.

8. Feldhäcksler (1) nach einem der vorangehenden Ansprüche, **dadurch gekennzeichnet, dass** die beidseitig der Drehachse (16) angeordneten Führungsabschnitte (18) als achsparallele Gleitflächen ausgeführt sind, die im Wesentlichen parallel zur Ebene der Drehachse (16) verlaufen.

9. Feldhäcksler (1) nach einem der vorangehenden Ansprüche, **dadurch gekennzeichnet, dass** der zumindest eine Linearaktor als Hydraulikzylinder (21), Linearmotor oder Spindel ausgeführt ist.

## Claims

1. A self-propelled forage harvester (1), with a post-acceleration unit (12) which rotates about an axis of rotation (16) for the variable acceleration of harvested material, wherein the end of the axis of rotation (16) is mounted in guides (17) which are displaceably disposed in guide sections (18) on side walls which delimit a housing (32) which encloses at least sections of the post-acceleration unit (12), wherein, for the variable acceleration of the harvested material, the width of a harvested material passage gap (14) of the post-acceleration unit (12) can be adjusted by means of a gap-changing device (19), wherein the gap-changing device (19) comprises at least one linear actuator (21) which is articulated at a first pivot point (24) of a coupling element (22) which is rotatably or pivotably articulated about an axis (25) which is in a fixed position with respect to the post-acceleration unit (12), as well as a lever assembly (23) which is articulated on the coupling element (22) at a second pivot point (26) which is separated from the first pivot point (24), **characterized in that** a first lever arm (27) is formed on the coupling element (22) between the stationary axis (25) and the first pivot point (24) and a second lever arm (28) is formed on the coupling element (22) between the fixed axis (25) and the second pivot point (26), wherein the lever ratio between the second lever arm (28) and the first lever arm (27) is between 1.01 and 1.2, in particular between 1.07 and 1.17.

2. The forage harvester (1) according to claim 1 or claim 2, **characterized in that** the lever assembly (23), which kinematically links the axis of rotation (16) to the coupling element (22), is formed as a toggle lever assembly.

3. The forage harvester (1) according to one of claims 1 to 3, **characterized in that** the lever assembly (23) introduces the translational movement in the plane of the axis of rotation (16) transmitted from the coupling element (22) into the guides (17).

4. The forage harvester (1) according to one of the preceding claims, **characterized in that** the lever assembly (23) comprises a first lever (29), which is articulated on the coupling element (22) at the second pivot point (26), and a second lever (30), one end of which is pivotably connected to the first lever (29) and the other end of which is rigidly fixed to the guide (17) of the axis of rotation (16).

5. The forage harvester (1) according to one of the preceding claims, **characterized in that** the gap-changing device (19) has an adjustment characteristic with a substantially progressively rising curve for the adjustment of the width of the harvested material passage gap (14).

6. The forage harvester (1) according to one of the preceding claims, **characterized in that** the gap-changing device (19) is configured to adjust the width of the harvested material passage gap (14) to a minimum value of 2 mm up to a maximum value of 80 mm.

7. The forage harvester (1) according to claim 7, **characterized in that** for a width of the harvested material passage gap (14) of less than approximately 35 mm, the first lever (29) extends substantially parallel to the guide sections (18).

8. The forage harvester (1) according to one of the preceding claims, **characterized in that** the guide sections (18) disposed on both sides of the axis of rotation (16) are formed as sliding surfaces with axes which are parallel to each other, which extend substantially parallel to the plane of the axis of rotation (16).

9. The forage harvester (1) according to one of the preceding claims, **characterized in that** the at least one linear actuator is formed as a hydraulic cylinder (21), linear motor or spindle.

## Revendications

1. Ramasseuse-hacheuse (1) automotrice, comprenant un organe distributeur-accélérateur (12) tournant autour d'un axe de rotation (16) et destiné à l'accélération variable de produits récoltés, l'axe de rotation (16) étant monté à ses extrémités dans des guides (17) qui sont disposés avec possibilité de déplacement dans des portions de guidage (18), sur des parois latérales qui délimitent un carter (32) enveloppant au moins par portions l'organe distributeur-accélérateur (12), sachant que pour l'accélération variable de la récolte, la largeur d'un jeu de passage de récolte (14) de l'organe distributeur-accélérateur (12) peut être adaptée à l'aide d'un dispositif de modification de jeu (19), le dispositif de modification de jeu (19) comprenant au moins un actionneur linéaire (21), qui est articulé dans un premier point d'articulation (24) sur un élément d'accouplement (22) disposé de manière stationnaire par rapport à l'organe distributeur-accélérateur (12), avec possibilité de rotation ou de pivotement autour d'un axe (25), ainsi qu'un dispositif de levier (23) qui est articulé sur l'élément d'accouplement (22) dans un deuxième point d'articulation (26) espacé du premier point d'articulation (24), **caractérisée en ce que**, sur l'élément d'accouplement (22), un premier bras de levier (27) est réalisé entre l'axe (25) stationnaire et le premier point d'articulation (24), et un deuxième bras de levier (28) est réalisé entre l'axe (25) stationnaire et le deuxième point d'articulation (26), le rapport de levier entre le deuxième bras de levier (28) et le bras de levier (27) étant compris entre 1,01 et 1,2, notamment entre 1,07 et 1,17.

2. Ramasseuse-hacheuse (1) selon la revendication 1 ou 2, **caractérisée en ce que** le dispositif de levier (23) qui relie l'axe de rotation (16) à l'élément d'accouplement (22) sur le plan cinématique est réalisé sous forme de dispositif à genouillère.

3. Ramasseuse-hacheuse (1) selon une des revendications 1 à 3, **caractérisée en ce que** le dispositif de levier (23) introduit dans les guides (17), le mouvement translatoire transmis par l'élément d'accouplement (22) dans le plan de l'axe de rotation (16).

4. Ramasseuse-hacheuse (1) selon une des revendications précédentes, **caractérisée en ce que** le dispositif de levier (23) comprend un premier levier (29), qui est articulé sur l'élément d'accouplement (22) dans le deuxième point d'articulation (26), et un deuxième levier (30) qui est relié par une extrémité de manière articulée au premier levier (29) et par son autre extrémité de manière rigide au guide (17) de l'axe de rotation (16).

5. Ramasseuse-hacheuse (1) selon une des revendications précédentes, **caractérisée en ce que** le dispositif de modification de jeu (19) présente une caractéristique de réglage avec une évolution augmentant de manière sensiblement progressive du réglage de la largeur du jeu de passage de récolte (14).

6. Ramasseuse-hacheuse (1) selon une des revendications précédentes, **caractérisée en ce que** le dispositif de modification de jeu (19) est conçu pour régler la largeur du jeu de passage de récolte (14) à une valeur minimale de 2 mm jusqu'à une valeur maximale de 80 mm.

7. Ramasseuse-hacheuse (1) selon la revendication 7, **caractérisée en ce qu'**en présence d'une largeur du jeu de passage de récolte (14) inférieure à environ 35 mm, le premier levier (29) s'étend de manière sensiblement parallèle aux portions de guidage (18).

8. Ramasseuse-hacheuse (1) selon une des revendications précédentes, **caractérisée en ce que** les portions de guidage (18) disposées de part et d'autre de l'axe de rotation (16) sont réalisées sous forme de surfaces de glissement à axes parallèles, qui s'étendent de manière sensiblement parallèle au plan de l'axe de rotation (16).

9. Ramasseuse-hacheuse (1) selon une des revendications précédentes, **caractérisée en ce que** l'actionneur linéaire, au nombre d'au moins un, est réalisé sous forme de vérin hydraulique (21), de moteur linéaire ou de broche.
